# EUROPEAN PATENT SPECIFICATION

(11) **EP 1 806 304 B1**
(45) Date of publication and mention of the grant of the patent: **13.08.2008**
(21) Application number: 07000338.9
(22) Date of filing: 09.01.2007
(51) Int. Cl.: B65G 47/52, B65G 47/88, B65B 13/18

(54) **Lifting apparatus**
Hebevorrichtung
Appareil de levage

(30) Priority: 09.01.2006 DK 200600031
(43) Date of publication of application: 11.07.2007
(73) Proprietor: Brødbæk & Co. A/S, 7173 Vonge (DK)
(72) Inventor: Dam, Leif Sørensen, 7160 Tørring (DK); Byager, Anders Peter, 7300 Jelling (DK)
(74) Representative: Tellefsen, Jens J.

(56) References cited:
- US-A- 2 818 795
- US-A- 4 944 139

## Description

### Field of the Invention

The present invention relates to a lifting apparatus, where said lifting apparatus is suitable to be placed in a packaging line for facilitating the strapping of packages carried on the production line.

### Background of the Invention

In the art, there are numerous production lines where the products are packaged and eventually strapped in order to keep the integrity of the items in the package. Strapping is a well-known method of encircling a package with a ribbon, for example a plastic strap having a thickness of a few millimetres and a width of ten to fifteen millimetres. In the art, there are numerous devices which will surround the package with a strap, tighten the strap and secure the strap in place, for example by attaching metal clamps connecting the two ends of the straps or welding/melting strap ends together in order to assure a safe connection between the two strap ends in order to maintain the strap in place. In order to encircle an item by strap, it is necessary to lift the package to be strapped such that the strap may encircle the item to be packaged completely. In the art, this has been done in various ways, and for larger items, for example items carried on a relatively stiff plate member being transported on battens, the strapping process includes hydraulic means which will elevate the package in order to allow the strapping process.

One example of such a prior art apparatus is disclosed in US 4,944,139. In this apparatus two conveyors are arranged in line with a gap arranged between the two conveyors, for transport of longitudinal objects, for example paper rolls. As the roll passes the gap, a band strapping machine will place a string or tape all around the object. The object is stopped at the desired position on the conveyors while the strapping machine places the strap around the object. The gap thereby facilitate that access may be gained for the strapping machine to the entire circumference of the object, while the object is suspended in the gap, carried by the two conveyors.

### Object of the Invention

The present invention provides a lifting apparatus making it superfluous to lift the items to be packaged, and at the same time provides an apparatus with a minimum of mechanical and electronic parts as well as power-consuming parts, yet still allowing a strapping apparatus to completely encircle and strap packages passing the apparatus.

### Description of the Invention

The present invention solves this by providing a lifting apparatus comprising at least two endless conveyor means where the first conveyor means is arranged for transporting a package to a strapping station, and the second conveyor means is arranged for transporting the strapped package away from the strapping station, such that the conveyor means defines a conveyor plane in which plane packages may be conveyed, and that a gap is provided between the two conveyor means, and that in the gap a strapping machine may be installed, that further a translating mechanism is provided, which mechanism comprises means for translating from a first extreme position to a second extreme position, where said mechanism comprises engagement means extending above the plane of the conveyor means plane, and that adjacent the engagement means an opening for an aperture is provided in the translating mechanism, where said opening and aperture extends below the plane of the conveyor means, and the mechanism is arranged to translate between the two extreme positions in response to a package transported on the conveyor means engaging the engagement means, such that the translating mechanism is moved, whereby the opening in the translating mechanism, at least for a part of the translation between the two extreme positions is superposed the gab between the two conveyor means, and at the same time an upper part of the translating mechanism elevates at least a part of the package from the conveyor plane.

This inventive solution provides a reliable, low energy consuming and strong mechanism. The mechanism is reliable in that the translating mechanism does not have to have an own power source, but may be powered by the package travelling on the conveyor means and as such is indirectly powered by the conveyor means. It is not necessary to install complicated electronics, hydraulics, pneumatics or the like, in that the mechanism is activated and controlled by the passages of packages on the conveyor structure. The mechanism may be constructed as a robust construction, as the own weight of the lifting device is not a problem for a proper functioning of the device, as long as it is assured that the translation between the extreme positions may be accomplished with a minimum of effort. Therefore by maintaining a motion of the translating member as frictionless as possible, the own weight has lesser importance. This on the other hand facilitates the possibility of constructing the lifting device as robust as may be desired.

In a further advantageous embodiment of the invention, the translating mechanism is in the shape of at least one plate member arranged to pivot about an axle arranged coaxial with an axis arranged under the gap perpendicular to the conveyor means' longitudinal direction, such that the plate may pivot between two extreme positions, and that the plate member has at least three edges, such that generally a triangle is formed, where one point of the triangle is attached to the pivot axle, and the opposite edge is curve-shaped, and furthermore that an aperture is provided in the plate member, where said aperture has an opening in the curved edge, where the curvature is such that when the plate member is pivoted to either of its extreme positions, the curved edge of the plate member is below the horizontal plane of the conveyor means, and when the opening is in a superposed position to the gap between the two conveyor means, the plate member extends above the horizontal plane of the conveyor means.

By introducing this inventive lifting apparatus in a production line, the package will, as it travels on the first conveyor means, be propelled by conveyor means onto the edge of the plate member, which thereby will rotate and slightly elevate the package to be strapped from the conveyor means. At this point, the conveyor means may optionally be stopped, but alternatively the strapping means are activated and able to operate through the opening provided in the plate means whereby it is possible for the strapping device to have access to the entire circumference of the packaging means, and thereby carry out the necessary strapping in a normal way. If the strapping can be performed while the package is in motion, and there is sufficient time to carry out the process, the conveyor need not be stopped. On the other hand, the conveyor may be stopped long enough to carry out the strapping procedure. Tests have indicated that conveyor speeds of 1-3 m/min may provided sufficient time for a continuous strapping procedure, depending on the size of the packages being conveyed. Therefore, the only limitation to the strapping device is the fact that it may be accommodated in the aperture in the plate member, and vice verse, the aperture in the plate member and the plate member itself may have a sufficient size to accommodate any desirable strapping machine.

The axis about which the plate member pivots is arranged such that the curved edge, which is opposite the axle, will rotate around the axis. By defining the curved edge substantially as a circle having an increased radius in the area on either side of the opening, it is possible to create a very smooth transition for the package travelling on the conveyor means such that a minimum of force is necessary in order to elevate the package as it passes the gab sufficiently in order for the strapping means to strap the package.

In a further advantageous embodiment of the invention, two plate members are arranged on a common pivot axis with a distance, and optionally the two conveyor means may be four conveyor chains arranged in parallel two and two and parallel to the planes of the plate members. In a number of applications, the size of the packages are such that it is advantageous to arrange conveying chains in parallel, and for these purposes, the lifting apparatus according to the present invention may be provided with connected plate members such that a plate member may be provided in line with each conveyor chain for a coordinated lift of the package such that the strapping procedure may be carried out.

In a still further advantageous embodiment of the invention, a notch is provided on the upper curved edge of the plate member or alternatively on a separate coupled plate member coplanar with the plate member, where said notch extends above the curved edge such that packages being transported on the conveyor means will engage the notch, and thereby cause the plate member to pivot, and lift the package free of the conveyor means for strapping, and further such that as the plate member is pivoted into an extreme position, the notch is below the conveyor means. By arranging the notch downstream of the opening, the package to be strapped will engage the notch when the desired strapping position on the package is superposed the opening. Furthermore, the conveyor means will propel the package against the notch and thereby activate the lifting apparatus such that the package is elevated and free to be strapped at the desired position. By adjusting the distance between the edge of the opening and the notch, the exact position for placing the strap around the package may be adjusted and previously decided. For some packages, it may be desirable to place the strap as close to the edge as possible, in which case the notch should be arranged as close to the edge of the opening as possible, whereas for other applications it might be desirable to secure that the strap is placed at a certain distance inside the edge of the package, in which cases the notch should be arranged further away from the edge of the opening.

As the plate member is pivoted to its extreme position, the package is lowered onto the conveyor belt, and ready for further transport along the process line. During the pivoting of the plate member, the plate member is urged against a biasing means which, as the package leaves the plate member, will urge the plate member back into its original position, ready for engagement with the following package. The biasing means may be an air spring, a mechanical spring, a resilient member which is compressed during the pivoting action of the plate member or any other suitable means. The switches mention above may be mechanical switches which are activated as the plate member pivots, or may be optical means such that as a pivoting action of the plate member is registered, for example when a light beam is disconnected, the conveyor means are halted/stopped. The skilled person will select any suitable means for providing switch means in connection with the lifting apparatus according to the present invention.

In a still further advantageous embodiment of the invention, the translating mechanism comprises at least one translating member arranged to slide on a curved member, such that the translating member when sliding on the curved member may pivot between said two extreme positions, and that the translating member has at least upper and lower edges, where the lower edge is curved in order to slide on the curved member, and furthermore that an aperture is provided in the translating member, where said aperture has an opening in the upper edge, where the curvature of the curved member is such that when the translating member is pivoted to either of its extreme positions, the upper edge of the translating member is below the plane of the conveyor means, and when the opening is in a superposed position to the gap between the two conveyor means, the upper edge of the translating member extends above the horizontal plane of the conveyor means.

This embodiment foresees the possibility that instead of having an axis around which the translating mechanism pivots, the translating mechanism may slide on a curved member such that the shape of the curved member and the corresponding curve at the lower edge of the translating member defines the movement of the upper edge and thereby the engagement of the translating mechanism with the package travelling on the conveyor means. From a constructional point of view, it may be simpler to construct the curved edges to slide on a curved member, and to adapt the lower edge of the translating member to a different curvature of the curved member in order to provide a smoother transition along the transition or higher lift of the upper edge in relation to packages being conveyed on the conveyor means.

The translating mechanism may be in the shape of two inverted L-members being attached to a curved lower member such that the other end of the L not attached to the curved member defines the opening. The opening is supposed to be superposed which the gap between the two conveyor means. The lover curved member hereby defines the lower edge of the translating member, and is provided with a curvature corresponding to the curve on the curved member on which the translating member slides. The two inverted L-members provide the aperture in order to accommodate the strapping machine, and in this manner create a relatively simple mechanical construction.

The apparatus is especially advantageous for use in connection with packages, where the package is arranged on pallets, sticks or battens. In this connection, it is foreseen that the pallet, stick or batten will engage the notch or the curve-shaped plate member extending above the conveyor means, whereby the strapping will be carried out around the package and the pallet, stick or batten, such that the entire circumference of the package is strapped, whereby the pallet, stick or batten is firmly attached to the package, and will remain there for further handling. This is particularly interesting when fork lifts or similar machinery is necessary in order to handle the goods placed in the package.

### Description of the Drawing

The invention will now be explained with respect to the accompanying drawing wherein
- fig. 1: illustrates a principle of the apparatus,
- fig. 2: illustrates a batten engaging the notch,
- fig. 3: illustrates a batten superposed the gab,
- fig. 4: illustrates a strapped batten continuing downstream, and
- fig. 5 and 6: illustrate alternative embodiments of the invention.

### Detailed Description of the Invention

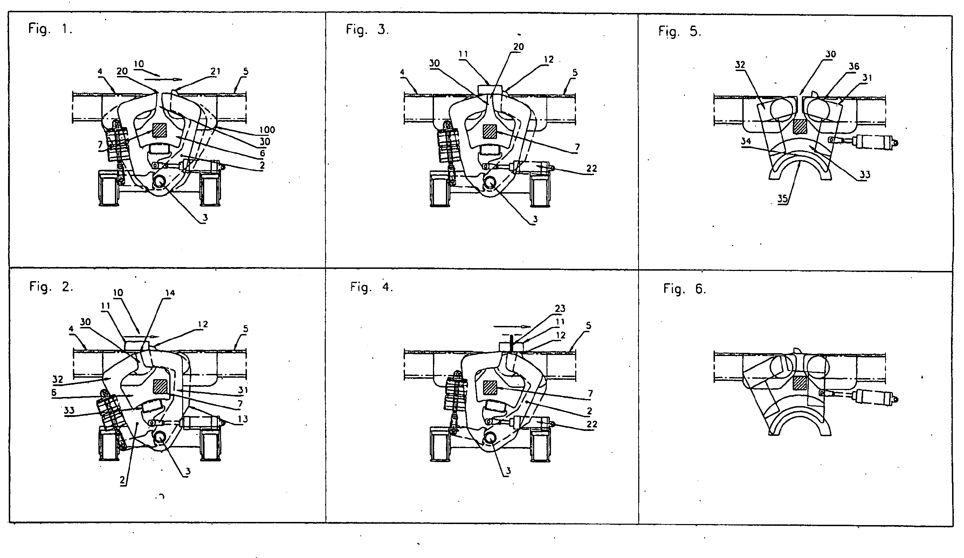

Turning to fig. 1, the terms "upstream" and "downstream" relate to the position of the package in relation to the apparatus. The arrow 10 illustrates the transport direction, and as such the package will arrive upstream, pass the apparatus, be strapped and continue downstream in a direction indicated by the arrow 10.

The apparatus 1 comprises a plate member 2 which is arranged to pivot about an axle 3, which axle is arranged perpendicular to the transport direction 10. Packages which it is desirable to strap will be transported on the two conveyor means 4, 5, which may be ordinary conveyor belts, conveyor chains or any suitable conveyor, depending on the packages to be strapped.

In the plate member 2, an aperture 6 is provided which aperture has a sufficient size to accommodate a strapping machine 7. The strapping machine is not specified as any suitable strapping machine which can carry out the task of strapping the packages transported on the conveyors 4, 5 may be utilised. The aperture 6 will have a corresponding size in order to accommodate the strapping machine 7. As illustrated in fig. 1, the aperture 6 has an oversize such that the plate member may pivot between extreme positions (indicated by dashed lines 100). The strapping machine 7 is fixed in relation to a gap 20 between the two conveyor means 4, 5, such that as the plate member 2 pivots between the extreme positions, the aperture has a sufficient size such as not to allow the plate member 2 to contact the strapping machine 7.

The plate member has a generally triangular shape, but may have any suitable shape as long as the characterising features of the invention are present. In order to allow the pivoting action, the axle 3 is arranged below the gab 20, and furthermore the aperture 6 is provided with an opening 30 such that as the opening 30 and the gap 20 are superposed, the strapping machine will have free access to any package travelling on the conveyor means 4, 5.

In order for a package travelling on the conveyor means 4, 5 to activate the lifting mechanism, a part of the plate member 21 may extend above the conveying plane defined by the conveyors 4, 5. As the package engages the extended section 21, the package will cause the plate member 2 to pivot about the axis 3, and thereby lift the package whereby the strapping action may be performed.

Turning to figs. 2-4, the working of the apparatus will be explained. In fig. 2, the transport direction is indicated by the arrow 10. This direction is common for all the embodiments of the invention explained. A package symbolised by a batten 11 is travelling on a first conveyor 4, and has engaged a notch 12. The notch 12 may be an integrated part of the plate member 2, or may as in this embodiment be arranged on a separate arm 13. By arranging the notch 12 on a separate arm 13, it is possible to adjust the distance between the edge of the notch 12 and the edge 14 of the opening 30 such that the strap may be provided at the most optimal place on the batten 11. By arranging the notch 12 closer to the edge 14, the strap will be placed more to the righthand side of the batten 11, and by arranging the notch 12 further from the edge 14, the strap may be arranged further to the left-hand side of the batten 11 as depicted in fig. 2. As the batten 11 travels in the direction 10, the plate member 2 is pivoted into a position as illustrated in fig. 3. In this position, the strapping machine 7 has free access to the batten 11 due to the superposition of the gab 20 between the two conveyor means 4, 5 and the opening 30 provided in the plate member 2. In this position, the strapping machine 7 may apply a strap to the package arranged on the batten 11. The pivoting motion of the plate member 2 from the position in fig. 2 to the position in fig. 3 also builds up tension in the biasing means 22. In this embodiment, the biasing means are illustrated as a gas spring.

As the package, and thereby the batten 11, continues in the travelling direction 10, i.e. downstream as illustrated in fig. 4, the plate member will pivot further whereby the notch 12 disengages the batten 11 such that the conveyor means 5 may propel the batten and thereby the package further in the procedure. At this stage, the batten and the package have been provided with a strap 23 as schematically illustrated. The position illustrated in figs. 2 and 4 are the extreme positions, i.e. the positions illustrated in fig. 1 by dashed lines 100. As the batten and thereby the package travels on further downstream, the plate member 2 and the notch 12 will be free to pivot, and due to the biasing force built up in the gas spring 22, it will pivot back into the position illustrated in fig. 2 ready to receive a new package or batten 11, and repeat the strapping procedure as explained above.

In the aperture 6 provided in the plate member, the size of this aperture is defined by the two arms 31, 32 of the plate member. In other embodiments of the invention, the arms 31, 32 may be separate members arranged for pivoting around the axle 3, and where the distance between the arms is maintained by the a distance keeper 33. By providing a wider distance keeper 33, the distance between the two arms 31, 32 may be increased or decreased such that the opening 30 may be larger or smaller. This is interesting when it is desirable to strap items of a particular size or where it is desirable to provide the strap in a particular position depending on the goods being transported on the conveyor means 4, 5.

Turning to fig. 5, an alternative embodiment of the invention is illustrated. In this embodiment the opening 30 in the translating member is created by two inverted L-shaped members 31,32. The L-shaped members are connected to a lower edge plate 33, such that a curve on the lower edge plate corresponds to a curve 34 on a curve member 35. By sliding the lower edge plate 33 along the curve 34, the upper edge 36 of the translating member 31,32 will move as indicated in fig 5 and 6. By designing the curve 34, the translating movement of the upper edge 36 may be designed according to the specific purpose at hand. In the illustrated embodiment, a cylinder 38 is attached to the translating member for powering the movement between the extreme positions, as the translating member is moved along the curve 34.

In the embodiments illustrated, the switch means which in some embodiments may be utilised in order to stop and activate the conveyor means 4, 5 are not illustrated.

## Claims

1. Translating apparatus comprising at least two endless conveyor means (4,5) where the first conveyor means (4) is arranged for transporting a package to a strapping station (7), and the second conveyor means (5) is arranged for transporting the strapped package away from the strapping station, such that the conveyor means defines a conveyor plane in which plane packages may be conveyed, and that a gap (20) is provided between the two conveyor means, and that in the gap a strapping machine may be installed, that further a translating mechanism (2) is provided, which mechanism comprises means for translating from a first extreme position to a second extreme position, **characterised in that** said mechanism comprises engagement means extending above the plane of the conveyor means plane, and that adjacent the engagement means an opening for an aperture (6) is provided in the translating mechanism (2), where said opening and aperture extends below the plane of the conveyor means, and the mechanism is arranged to translate between the two extreme positions in response to a package transported on the conveyor means engaging the engagement means, such that the translating mechanism is moved, whereby the opening in the translating mechanism, at least for a part of the translation between the two extreme positions, is superposed the gap between the two conveyor means.

2. Apparatus according to claim 1 wherein the translating mechanism comprises at least one plate member arranged to pivot about an axle (3) arranged coaxial with an axis arranged under the gap (20) perpendicular to the conveyor means' longitudinal direction, such that the plate may pivot between said two extreme positions, and that the plate member has at least three edges, such that generally a triangle is formed, where one point of the triangle is attached to the pivot axle (3), and the opposite edge is curve-shaped, and furthermore that an aperture (6) is provided in the plate member, where said aperture has an opening in the curved edge, where the curvature is such that when the plate member is pivoted to either of its extreme positions, the curved edge of the plate member is below the plane of the conveyor means, and when the opening is in a superposed position to the gap between the two conveyor means, the plate member extends above the plane of the conveyor means.

3. Apparatus according to claim 2 wherein two plate members (2) are arranged on a common pivot axis (3) with a distance, and that optionally the two conveyor means may be four conveyor chains arranged in parallel two and two and parallel to the planes of the plate members.

4. Apparatus according to claim 2 or 3 wherein a notch (12) is provided on the upper edge of the plate member (2) or alternatively on a separate coupled plate member coplanar with the plate member, where said notch extends above the edge (14) such that packages being transported on the conveyor means will engage the notch, and thereby cause the plate member to pivot, and free the package from the conveyor means for strapping, and further such that as the plate member is pivoted into an extreme position, the notch is below the conveyor means.

5. Apparatus according to claim 2 wherein switch means are provided, which switch means are activated when the gap is superposed the opening in the plate member, where the switch stops the conveying means and activates the strapping means, after which the switch is reset and the conveyor means activated again, such that biasing means (22) connected to the plate member will pivot the plate back to the first extreme position, exposing the notch to the next package on the conveyor.

6. Apparatus according to claim 1 wherein the translating mechanism comprises at least one translating member (33) arranged to slide on a curved member (35), such that the translating member when sliding on the curved member may pivot between said two extreme positions, and that the translating member has at least upper and lower edges, where the lower edge is curved in order to slide on the curved member, and furthermore that an aperture is provided in the translating member, where said aperture has an opening in the upper edge, where the curvature of the curved member is such that when the translating member is pivoted to either of its extreme positions, the upper edge of the translating member is below the plane of the conveyor means, and when the opening is in a superposed position to the gap between the two conveyor means, the upper edge of the translating member extends above the horizontal plane of the conveyor means.

7. Apparatus according to any preceding claim wherein the package is arranged on a pallet, sticks or battens (11).

## Patentansprüche

1. Translationsvorrichtung, umfassend wenigstens zwei Endlosfördermittel (4, 5), wobei das erste Fördermittel (4) dazu angeordnet ist, ein Paket zu einer Umreifungsstation (7) zu transportieren, und das zweite Fördermittel (5) dazu angeordnet ist, das umreifte Paket von der Umreifungsstation abzutransportieren, so dass die Fördermittel eine Förderebene bestimmen, wobei in der Ebene Pakete befördert werden können, und dass ein Spalt (20) zwischen den beiden Fördermitteln vorgesehen ist und dass in dem Spalt eine Umreifungsmaschine installiert sein kann, dass weiterhin ein Translationsmechanismus (2) vorgesehen ist, wobei der Mechanismus Mittel zum Translatieren aus einer ersten Extremposition in eine zweite Extremposition umfasst, **dadurch gekennzeichnet, dass** der Mechanismus Eingriffsmittel umfasst, die sich oberhalb der Ebene der Fördermittelebene erstrecken, und dass angrenzend an die Eingriffsmittel eine Öffnung für eine Aussparung (6) in dem Translationsmechanismus (2) vorgesehen ist, wobei sich Öffnung und Aussparung unterhalb der Ebene des Fördermittels erstrecken, und der Mechanismus dazu ausgestaltet ist, in Reaktion darauf, dass ein auf den Fördermitteln transportiertes Paket mit dem Eingriffsmittel in Eingriff tritt, zwischen den beiden Extrempostionen zu translatieren, so dass der Translationsmechanismus bewegt wird, wodurch die Öffnung in dem Translationsmechanismus wenigstens für einen Teil der Translation zwischen den beiden Extrempositionen dem Spalt zwischen den beiden Fördermitteln überlagert wird.

2. Vorrichtung gemäß Anspruch 1, wobei der Translationsmechanismus wenigstens ein Plattenelement umfasst, das dazu angeordnet ist, um eine Achse (3) zu schwenken, die koaxial mit einer Achse angeordnet ist, welche unter dem Spalt (20) senkrecht zu der Längsrichtung der Fördermittel angeordnet ist, so dass die Platte zwischen den beiden Extrempositionen schwenken kann, und dass das Plattenelement wenigstens drei Kanten aufweist, so dass generell ein Dreieck gebildet wird, wobei ein Punkt des Dreiecks an der Schwenkachse (3) angebracht ist und die gegenüberliegende Kante gekrümmt ist, und außerdem dass eine Aussparung (6) in dem Plattenelement vorgesehen ist, wobei die Aussparung eine Öffnung in der gekrümmten Kante aufweist, wobei die Krümmung derart ist, dass, wenn das Plattenelement in eine seiner Extrempositionen geschwenkt ist, die gekrümmte Kante des Plattenelementes sich unterhalb der Ebene der Fördermittel befindet, und wenn die Öffnung sich zu dem Spalt zwischen den beiden Fördermitteln in einer überlagerten Position befindet, das Plattenelement sich oberhalb der Ebene der Fördermittel erstreckt.

3. Vorrichtung gemäß Anspruch 2, wobei zwei Plattenelemente (2) mit Abstand an einer gemeinsamen Schwenkachse (3) angeordnet sind, und dass optional die beiden Fördermittel vier Förderketten sein können, die parallel zu zweit und parallel zu den Ebenen der Plattenelemente angeordnet sind.

4. Vorrichtung gemäß Anspruch 2 oder 3, wobei ein Rastelement (12) an der oberen Kante des Plattenelementes (2) oder alternativ an einem separaten, gekoppelten, mit dem Plattenelement koplanaren Plattenelement vorgesehen ist, wobei das Rastelement sich in der Weise oberhalb der Kante (14) erstreckt, dass auf den Fördermitteln transportierte Pakete mit dem Rastelement in Eingriff treten und **dadurch** ein Schwenken des Plattenelementes bewirken und das Paket zum Umreifen von den Fördermitteln lösen, und weiterhin in der Weise, dass sich das Rastelement beim Schwenken des Plattenelementes in eine Extremposition unterhalb der Fördermittel befindet.

5. Vorrichtung gemäß Anspruch 2, wobei Schaltermittel vorgesehen sind, wobei die Schaltermittel aktiviert werden, wenn der Spalt der Öffnung in dem Plattenelement überlagert ist, wobei der Schalter die Fördermittel anhält und das Umreifungsmittel aktiviert, woraufhin der Schalter zurückgestellt und die Fördermittel wieder aktiviert werden, so dass mit dem Plattenelement verbundene Vorspannmittel (22) die Platte zu der ersten Extremposition zurückschwenken, wobei das Rastelement für das nächste Paket auf dem Förderer freigelegt wird.

6. Vorrichtung gemäß Anspruch 1, wobei der Translationsmechanismus wenigstens ein Translationselement (33) umfasst, das dazu angeordnet ist, auf einem gekrümmten Element (35) in der Weise zu gleiten, dass das Translationselement beim Gleiten auf dem gekrümmten Element zwischen den beiden Extrempositionen schwenken kann, und dass das Translationselement wenigstens obere und untere Kanten aufweist, wobei die untere Kante gekrümmt ist, um auf dem gekrümmten Element zu gleiten, und außerdem dass eine Aussparung in dem Translationselement vorgesehen ist, wobei die Aussparung eine Öffnung in der oberen Kante aufweist, wobei die Krümmung des gekrümmten Elementes derart ist, dass, wenn das Translationselement in eine seiner Extrempositionen geschwenkt ist, die obere Kante des Translationselementes sich unterhalb der Ebene des Fördermittels befindet, und wenn die Öffnung sich zu dem Spalt zwischen den beiden Fördermitteln in einer überlagerten Position befindet, die obere Kante des Translationselementes sich oberhalb der horizontalen Ebene der Fördermittel erstreckt.

7. Vorrichtung gemäß einem der vorhergehenden Ansprüche, wobei das Paket auf einer Palette, Stäben oder Leisten (11) angeordnet ist.

## Revendications

1. Appareil de translation comprenant au moins deux transporteurs sans fin (4,5) où le premier transporteur (4) est agencé pour transporter un paquet à un poste d'empaquetage (7) et le second transporteur (5) est agencé pour transporter le paquet empaqueté loin du poste d'empaquetage de sorte que le transporteur définisse un plan de transporteur dans lequel plan les paquets peuvent être transportés et qu'un écart (20) est fourni entre les deux transporteurs et que dans l'écart une machine d'empaquetage peut être installée, que de plus un mécanisme de translation (2) est fourni, lequel mécanisme comprend des moyens pour translater depuis une première position extrême à une seconde position extrême **caractérisé en ce que** ledit mécanisme de translation comprend des moyens d'engagement s'étendant au dessus du plan du plan des transporteurs et qu'une ouverture pour un orifice (6) adjacente aux moyens d'engagement est fournie dans le mécanisme de translation (2) où lesdits ouverture et orifice s'étendent sous le plan du transporteur et le mécanisme est agencé pour se déplacer entre les deux positions extrêmes en réponse à un paquet transporté sur le transporteur engageant le moyen d'engagement de sorte que le mécanisme de translation est déplacé, par quoi l'ouverture dans le mécanisme de translation, au moins pour une partie de la translation entre les deux positions extrêmes, est superposé à l'écart entre les deux transporteurs.

2. Appareil selon la revendication 1 où le mécanisme de translation comprend au moins un membre formant plaque agencé pour pivoter autour d'un axe (3) agencé de manière coaxiale avec un axe agencé sous l'écart (20) perpendiculaire à la direction longitudinale des transporteurs de sorte que la plaque peut pivoter entre lesdites deux positions extrêmes et que le membre formant plaque a au moins trois bords de sorte que généralement un triangle est formé où un point du triangle est attaché à l'axe de pivotement (3) et le bord opposé est en forme de courbe et de plus qu'un orifice (6) est fourni dans le membre formant plaque où ledit orifice a une ouverture dans le bord courbé, où la courbure est telle que quand le membre formant plaque est pivoté à l'une de ces positions extrêmes, le bord courbé du membre formant plaque est sous le plan des transporteurs et quand l'ouverture est dans une position superposée à l'écart entre les deux transporteurs, le membre formant plaque s'étend sur le plan des transporteurs.

3. Appareil selon la revendication 2 où deux membres formant plaque (2) sont agencés avec une distance sur un axe pivot commun (3) et qu'éventuellement les deux transporteurs peuvent être quatre chaînes de transporteurs agencées en parallèle deux à deux et parallèle aux plans des membres formant plaque.

4. Appareil selon la revendication 2 ou 3 où un élément d'accrochage (12) est fourni sur le bord supérieur du membre formant plaque (2) ou alternativement sur un membre formant plaque couplé séparé coplanaire avec le membre formant plaque, où ledit élément d'accrochage s'étend sur le bord (14) de sorte que les paquets étant transportés sur les transporteurs vont engager 1' élément d'accrochage et par là faire pivoter le membre formant plaque et libérer le paquet des transporteurs pour empaquetage et de plus de sorte que, tandis que le membre formant plaque est pivoté en un position extrême, l'élément d'accrochage est sous les transporteurs.

5. Appareil selon la revendication 2 où des moyens de commutations sont fournis, lesquels moyens de commutation sont activés quand l'écart est superposé à l'ouverture dans le membre formant plaque, où le commutateur stoppe les transporteurs et active les moyens d'empaquetage, après quoi le commutateur est remis à l'état initial et les transporteurs de nouveau activés de sorte que des moyens de sollicitation (22) connectés au membre formant plaque vont repivoter la plaque à la première position extrême, exposant l'élément d'accrochage au prochain paquet sur le transporteur.

6. Appareil selon la revendication 1 où le mécanisme de translation comprend au moins un membre de translation (33) agencé pour coulisser sur un membre courbe (35) de sorte que le membre de translation quand il coulisse sur le membre courbe peut pivoter entre lesdites deux positions extrêmes et que le membre de translation a au moins des bords supérieur et inférieur où le bord inférieur est courbé afin de coulisser sur le membre courbe et de plus de sorte qu'un orifice est fourni dans le membre de translation, où ledit orifice a une ouverture dans le bord supérieur, où la courbure du membre courbe est telle que quand le membre de translation est pivoté à une de ces positions extrêmes, le bord supérieur du membre de translation est sous le plan du transporteur et quand l'ouverture est dans une position superposée à l'écart entre les deux transporteurs, le bord supérieur du membre de translation s'étend sur le plan horizontal des transporteurs.

7. Appareil selon la revendication l'une des revendications précédentes où le paquet est agencé sur une palette, des bâtons ou des bandes (11).
